Europäisches Patentamt

European Patent Office

Office européen des brevets

(19)

(11) Veröffentlichungsnummer : **0 193 536**
B1

(12) EUROPÄISCHE PATENTSCHRIFT

(45) Veröffentlichungstag der Patentschrift :
17.08.88

(51) Int. Cl.⁴ : **B 62 D 25/20**, B 61 D 17/10

(21) Anmeldenummer : 85902949.8

(22) Anmeldetag : 27.06.85

(86) Internationale Anmeldenummer :
PCT/CH 85/00102

(87) Internationale Veröffentlichungsnummer :
WO/8600588 (30.01.86 Gazette 86/03)

(54) BODENPLANKE.

(30) Priorität : 10.07.84 CH 3339/84

(43) Veröffentlichungstag der Anmeldung :
10.09.86 Patentblatt 86/37

(45) Bekanntmachung des Hinweises auf die Patenterteilung : 17.08.88 Patentblatt 88/33

(84) Benannte Vertragsstaaten :
AT BE CH DE FR GB IT LI LU NL SE

(56) Entgegenhaltungen :
DE-A- 1 555 611
DE-B- 1 270 964
GB-A- 764 471
Revue de l'Aluminium; Nr. 481, Februar 1979, Paris
(FR), J.P. Verollet et al.: "Profilés fermés à haute
résistance obtenus par filage"

(73) Patentinhaber : Schweizerische Aluminium AG

CH-8212 Neuhausen am Rheinfall (CH)

(72) Erfinder : HRASCHE, Heinrich
Zinggenstrasse 7
CH-8953 Dietikon (CH)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft eine Bodenplanke, insbesondere aus zusammengesetzten Profilen, mit in Längsrichtung verlaufenden Rinnen, die ausgehend von einer Rinnenöffnung sich nach unten durch Hinterschneidungen ausweiten, wobei in die Rinnen elastische Einlagen eingelegt sind, die mit beidseitig nach aussen gerichteten Stegen in die Hinterschneidungen eingreifen.

Bodenplanken, insbesondere zur Aufnahme von Ladegütern, müssen in besonderem Masse begehsicher bzw. rutschfest sein.

Aus der GB-A-764 471 sind in einer beispielsweise aus Aluminium bestehenden Bodenplanke, welche auch für Fahrzeuge eingesetzt werden kann, in Längsrichtung verlaufende Rinnen ausgebildet. In diese sind Gleitschutzstreifen eingefügt, welche beispielsweise aus Hartholz oder einer Verbindung mit hohem Reibungskoeffizienten bestehen.

In der DE-B-1 270 964 wird eine Plattform für ein Fahrzeug beschrieben, die aus einer Vielzahl von sich über die Fahrzeuglänge erstreckenden, nebeneinander gereihten und aneinander befestigten Teilstücken in Form von Profilstäben besteht. Diese Profilstäbe sind miteinander verschweisst, wobei die Schweissnaht in einem U-förmigen Fuss verläuft, in welchem eine entsprechende, ebenfalls in Längsrichtung verlaufende Ausformung des Nachbarprofilstabes eingreift. Diese Ausformung ist mit einer überstehenden Gleitschutzleiste aus Holz, Gummi od. dgl. ausgefüllt.

Die DE-A-1 555 611 beschreibt eine Ladefläche eines Kraftfahrzeuges mit den Merkmalen des Oberbegriffes des Anspruchs 1, bei welcher in Längsrichtung oben offene Rinnen eingeformt sind, die sich ausgehend von der Rinnenöffnung nach unten durch Hinterschneidungen ausweiten. In die Rinnen sind elastische Einlagen eingelegt, die gleichzeitig die Rinnen oben abdecken. Zur Fixierung der Einlagen greifen deren beidseitig nach aussen gerichteten Stege in die Hinterschneidungen ein. Wegen der sich stets über der Bodenebene der Ladefläche befindlichen, die Rinnen abdeckenden Teile der Einlagen unterliegen diese einem starken Verschleiss. Ferner ist das Einsetzen der Einlagen in die Rinnen nur unter Abwinkelung der Stege um etwa 90° gegenüber ihrer ursprünglichen Lage möglich, da die Stege in die Hinterschneidungen nahezu vollflächig eingreifen. Somit ist sowohl die Erstmontage der Einlagen als auch insbesondere deren Entfernung bei Reparaturarbeiten mit Schwierigkeiten verbunden.

Diese bekannten Ausbildungen der Bodenplanken sind zwar recht rutschfest, haben aber den wesentlichen Nachteil, dass sie wegen der stets überstehenden Streifen beim Querbefahren mit beispielsweise Handhubwagen erheblichen Lärm erzeugen oder wegen der abstehenden elastischen Streifen verhältnismässig rasch abgenutzt sind bzw. aus ihrer Halterung gerissen werden und nur mit grossem Aufwand ersetzt werden können.

Der Erfinder hat sich deshalb, ausgehend vom letztgenannten Stand der Technik, die Aufgabe gestellt, Bodenplanken der oben genannten Art zu entwickeln, welche rutschfest, verladegerecht und wartungsfreundlich sind und beim Befahren erheblich weniger Lärm erzeugen, d. h. insbesondere das übliche Rattern verhindern.

Im wesentlichen wird unter verladegerecht verstanden, dass ein Transportieren von Ladegütern ohne Behinderung durch die elastischen Einlagen möglich sein soll, und unter wartungsfreundlich, dass die Montage und der Ersatz der elastischen Einlagen in einfacher Weise erfolgen kann.

Die Aufgabe wird erfindungsgemäss durch eine Bodenplanke gelöst, die sich nach dem Wortlaut des Anspruchs 1 auszeichnet.

Vorteilhafte Weiterbildungen der erfindungsgemässen Bodenplanke sind durch die Merkmale der Ansprüche 2 bis 6 gekennzeichnet.

Durch das vorübergehende Eindrücken der gegebenenfalls die Bodenplanken überragenden Einlagen in die Rinnen werden diese beim Befahren, beispielsweise mit Handwagen, oder beim Verschieben von Ladegütern vor übermässigem Verschleiss bzw. Ausreissen bewahrt.

Da die elastischen Einlagen nach der Erfindung üblicherweise nicht oder nur wenig über die Bodenplankenebene vorstehen, was eine auf die Einlagen zurückzuführende Lärmerzeugung vermeidet, können sie auch nur in geringem Masse beschädigt werden. Notfalls werden die Einlagen auf einfache Weise aus den Rinnen nach oben herausgezogen und durch neue ersetzt.

Ferner haben die elastischen Einlagen neben den Eigenschaften, beim Ueberfahren keinen Lärm zu erzeugen und der einfachen Handhabung, den Vorteil, dass sie einem Verrutschen der Last entgegenwirken und die Begehsicherheit erhöhen.

Die Grössenverhältnisse einer als Vollkörper ausgebildeten Einlage und der Rinne sind so bemessen, dass Dehnungsfugen vorhanden sind, um eine vorübergehende Verformung der elastischen Einlage beim Ueberfahren zu gestatten, falls diese die Bodenplanke etwas überragt.

Zweckmässig besteht die Bodenplanke aus einem Metall, insbesondere Aluminium, oder einem Hartkunststoff. In jedem Fall zeichnet sich die erfindungsgemässe Bodenplanke durch guten Gleitschutz, Geräuscharmut und Langlebigkeit aus.

Die Bodenplanke wird z. B. für Land- Wasser- und Luftfahrzeuge verwendet, insbesondere für Ladebrücken von Strassen- und Schienenfahrzeugen, aber auch für Kühlräume, Verladerampen, Ueberfahrbrücken oder Landedecks für Helikopter.

Die Erfindung wird anhand von in der Zeichnung dargestellten Ausführungsbeispielen näher erläutert. Die schematischen vertikalen Querschnitte zeigen in :

Fig. 1 einen Teilschnitt einer Bodenplanke mit eingesetzten Einlagen,

Fig. 2 einen Teilschnitt einer wellförmigen Kühlwagenbodenplanke mit eingesetzten Einlagen,

Fig. 3 einen vergrösserten Teilschnitt aus Fig. 1 mit und ohne Einlage und

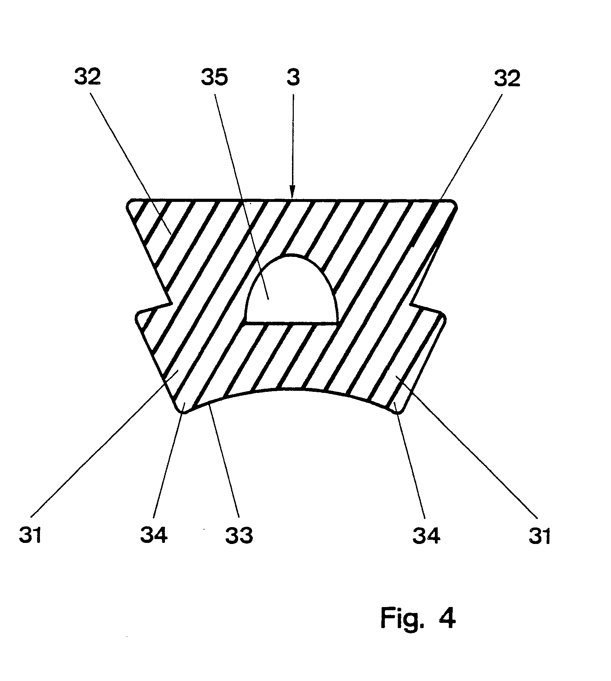

Fig. 4 einen vergrösserten Teilschnitt einer Einlage.

Eine Lastwagenbrücke besteht unter anderem aus einer Bodenplanke 1, welche aus einzelnen auswechselbaren Profilen zusammengesetzt ist. Wird Aluminium bzw. eine Aluminiumlegierung für die Bodenplanke 1 bevorzugt, bieten sich stranggepresste Profile an, da diese ohne grossen zusätzlichen Aufwand mit verstärkenden oder versteifenden Stegen, Streifen od. dgl. versehen werden können.

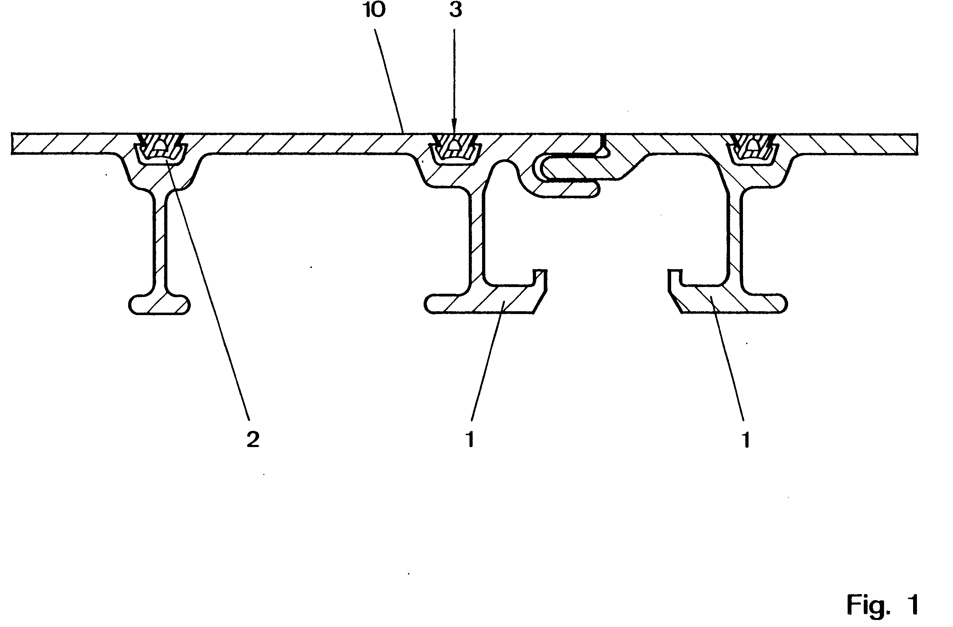

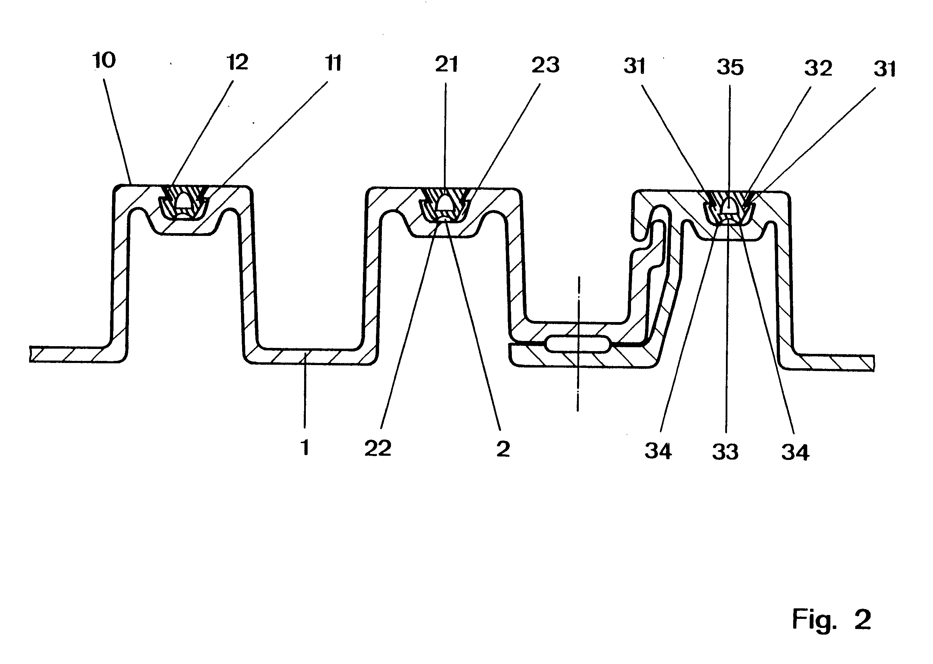

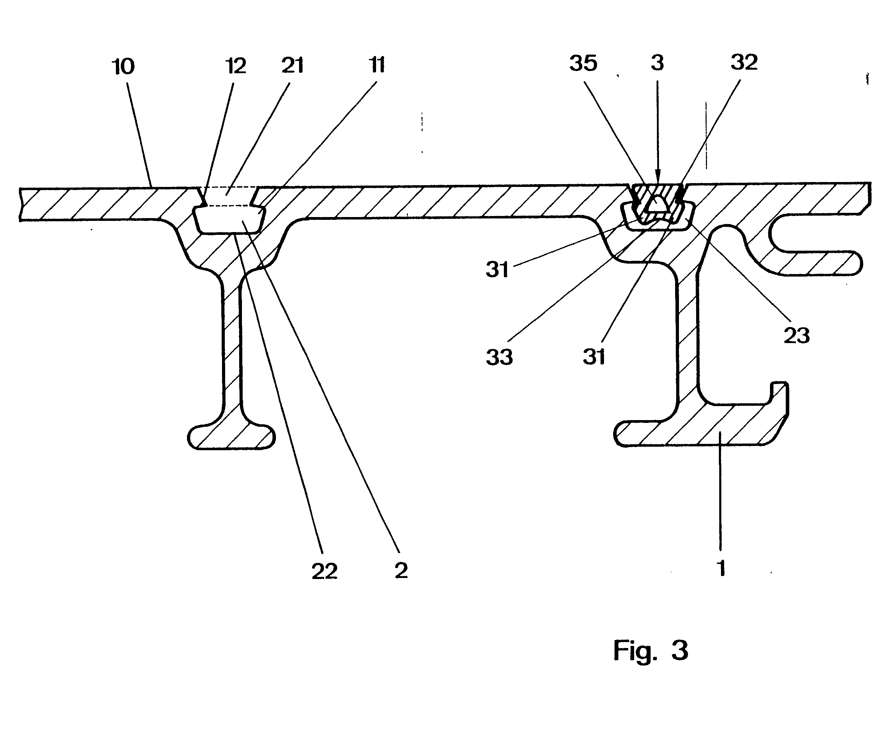

Figur 2 unterscheidet sich von Figur 1 durch die wellförmige Ausbildung der Bodenplanke 1 mit je einer Rinne 2 in der Auflagefläche. Die Form der Rinne 2 und der Einlage 3 entspricht der in Figur 1. Der besseren Uebersicht wegen zeigt Figur 3 eine Rinne 2 ohne Einlage 3 und eine Rinne 2 mit Einlage 3.

Jedes Profil der Bodenplanke 1 enthält Rinnen 2 in Längsrichtung, die sich ausgehend von einer Rinnenöffnung 21 nach unten durch Hinterschneidungen 11 ausweiten. In die Rinnen 2 sind elastische Einlagen 3 eingelegt, die mit beidseitig nach aussen gerichteten Stegen 31 in die Hinterschneidungen 11 eingreifen. Vor den Hinterschneidungen 11 laufen die Stirnwände 12 der Rinnenöffnung 21 in Richtung Rinnenboden 22 aufeinander zu. Der obere Teil 32 der elastischen Einlage 3 füllt zumindest bei Belastung der Einlage 3 die Rinnenöffnung 21 aus. Im linken Teil der Figur 3 ist die Begrenzung der Rinnenöffnung 21 durch gestrichelte Linien kenntlich gemacht. Die Stege 31 füllen die Hinterschneidungen 11 nicht vollständig aus. Die Einlage 3 weist unten eine Auflagefläche 33 auf, die zur Abstützung auf dem Rinnenboden 22 zur Anlage kommen kann. Figur 1 zeigt die Auflagefläche 33 im nicht abgestützten, Figur 2 im abgestützten Zustand.

Bevorzugt wird die Einlage 3 mit einem ebenfalls in Längsrichtung verlaufenden Hohlraum 35 versehen, der das Einsetzen bzw. Entfernen der Einlage 3 in/aus die/der Rinne 2 erleichtert.

Aus dem gleichen Grund ist es vorteilhaft, die Breite der Auflagefläche 33 kleiner als die Breite der Rinnenöffnung 21 auf der Oberseite 10 der Bodenplanke 1 auszubilden.

Ein Teil 32 der Einlage 3 füllt zumindest bei Belastung derselben die Rinnenöffnung 21 formschlüssig aus, wohingegen die Stege 31 den restlichen Teil 23 der Rinne 2 nicht vollständig ausfüllen. Bei Belastung der Einlage 3 weicht diese zurück und stützt sich mit ihrer Auflagefläche 33 auf den Rinnenboden ab. Ist die Auflagefläche z. B. konkav, erfolgt die Abstützung durch Auflagerippen 34.

Die Einlage 3 und die Oberseite 10 der Bodenplanke 1, die die Ladefläche bildet, sind bündig, wie es die Figuren 1 bis 3 zeigen, oder ragen vorteilhaft höchstens — z. B. aufgrund von Herstellungstoleranzen oder Montageungenauigkeiten — 0.5 mm aus der Rinne 2 heraus. Erstaunlicherweise bilden die Einlagen 3 dennoch einen guten Gleitschutz.

## Patentansprüche

1. Bodenplanke (1), insbesondere aus zusammengesetzten Profilen, mit in Längsrichtung verlaufenden Rinnen (2), die ausgehend von einer Rinnenöffnung (21) sich nach unten durch Hinterschneidungen (11) ausweiten, wobei in die Rinnen (2) elastische Einlagen (3) eingelegt sind, die mit beidseitig nach aussen gerichteten Stegen (31) in die Hinterschneidungen (11) eingreifen, dadurch gekennzeichnet, dass vor den Hinterschneidungen (11) die Stirnwände (12) der Rinnenöffnung (21) in Richtung Rinnenboden (22) aufeinander zulaufen, dass der obere Teil (32) der elastischen Einlage (3) die Rinnenöffnung (21) zumindest bei Belastung der Einlage (3) formschlüssig ausfüllt, dass die Stege (31) die Hinterschneidungen (11) nicht vollständig ausfüllen und dass die Einlage (3) unten eine Auflagefläche (33) aufweist, die zur Abstützung auf dem Rinnenboden (22) zur Anlage kommen kann.

2. Bodenplanke (1) nach Anspruch 1, dadurch gekennzeichnet, dass die Stege (31) der elastischen Einlage (3) in Richtung Rinnenboden (22) aufeinander zulaufen.

3. Bodenplanke (1) nach Anspruch 1 oder 2, dadurch gekennzeichnet, dass die Breite der Auflagefläche (33) der elastischen Einlage (3) kleiner ist als die Breite der Rinnenöffnung (21) auf der Oberseite (10) der Bodenplanke (1).

4. Bodenplanke (1) nach einem der Ansprüche 1 bis 3, dadurch gekennzeichnet, dass die elastische Einlage (3) in Längsrichtung einen Hohlraum (35) aufweist.

5. Bodenplanke (1) nach einem der Ansprüche 1 bis 4, dadurch gekennzeichnet, dass die elastische Einlage (3) aus Gummi oder Kunststoff besteht.

6. Bodenplanke (1) nach einem der Ansprüche 1 bis 5, dadurch gekennzeichnet, dass die elastische Einlage (3) mit der Oberseite (10) der Bodenplanke (1) bündig ist.

## Claims

1. Floor plate (1), composed especially of sections joined together, with channels (2) extending longitudinally and, starting from a channel aperture (21), widening downwards by means of undercuts (11), elastic inlays (3) being inserted into the channels (2) and engaging into the undercuts (11) by means of webs (31) directed outwards on both sides, characterized in that, in front of the undercuts (11), the end walls (12) of the channel aperture (21) converge towards one another in the direction of the channel bottom (22), in that the upper part (32) of the elastic inlay (3) fills the channel aperture (21) positively, at least when the inlay (3) is subjected to a load, in that the webs (31) do not completely fill the undercuts (11), and in that the inlay (3) has, at the bottom, a bearing surface (33) which can come to rest on the channel bottom (22) in order to provide support.

2. Floor plate (1) according to Claim 1, characterized in that the webs (31) of the elastic inlay (3) converge towards one another in the direction of the channel bottom (22).

3. Floor plate (1) according to Claim 1 or 2, characterized in that the width of the bearing surface (33) of the elastic inlay (3) is less than the width of the channel aperture (21) of the top side (10) of the floor plate (1).

4. Floor plate (1) according to one of Claims 1 to 3, characterized in that the elastic inlay (3) has a cavity (35) in the longitudinal direction.

5. Floor plate (1) according to one of Claims 1 to 4, characterized in that elastic inlay (3) consists of rubber or plastic.

6. Floor plate (1) according to one of Claims 1 to 5, characterized in that the elastic inlay (3) is flush with the top side (10) of the floor plate (1).

**Revendications**

1. Plaque de plancher (1), en particulier en profilés assemblés, comportant des rigoles (2) qui sont dirigées dans la direction longitudinale et, en partant d'une ouverture (21) de rigole, vont en s'élargissant vers le bas par des chambrages (11), étant précisé que dans les rigoles (2) sont insérées des garnitures élastiques (3) qui se logent à force dans les chambrages (11) par des nervures (31) dirigées, des deux côtés, vers l'extérieur, caractérisée en ce que en avant des chambrages (11) les parois frontales (12) de l'ouverture (21) de la goulotte sont orientées l'une vers l'autre et en direction du fond (22) de la goulotte ; en ce que la partie supérieure (32) de la garniture élastique (3) remplit l'ouverture (21) de la goulotte, de par la forme, au moins lorsque la garniture (3) est sous contrainte ; en ce que les nervures (31) ne remplissent pas complètement les chambrages (11) ; et en ce que la garniture (3) présente par-dessous une surface d'appui (33) qui peut venir en contact pour donner un appui sur le fond (22) de la goulotte.

2. Plaque de plancher (1) selon la revendication 1, caractérisée en ce que les nervures (31) de la garniture élastique (3) sont orientées l'une vers l'autre et en direction du fond (22) de la goulotte.

3. Plaque de plancher (1) selon la revendication 1 ou 2, caractérisée en ce que la largeur de la surface d'appui (33) de la garniture élastique (3) est inférieure à la largeur de l'ouverture (21) de la goulotte sur la face supérieure (10) de la plaque de plancher (1).

4. Plaque de plancher selon l'une des revendications 1 à 3, caractérisée en ce que la garniture élastique (3) présente en direction longitudinale un espace creux (35).

5. Plaque de plancher (1) selon l'une des revendications 1 à 4, caractérisée en ce que la garniture élastique (3) est constituée de caoutchouc ou de plastique.

6. Plaque de plancher (1) selon l'une des revendications 1 à 5, caractérisée en ce que la garniture élastique (3) vient affleurer avec la face supérieure (10) de la plaque de plancher (1).

**Fig. 1**

0 193 536

Fig. 2

31 32 35 31 23 21 11 12 10

34 33 34 2 22 1

Fig. 3

0 193 536

Fig. 4